# EUROPEAN PATENT APPLICATION

(11) **EP 3 316 153 A1**
(43) Date of publication of application: **02.05.2018**
(21) Application number: 15896226.6
(22) Date of filing: 30.12.2015
(51) Int. Cl.: G06F 17/50, B63B 9/00

(54) **FAIRING METHOD FOR ASYMMETRIC SHIP**

(30) Priority: 23.06.2015 CN 201510351739
(71) Applicant: Guangzhou Shipyard International Company Limited, Guangzhou, Guangdong 511462 (CN)
(72) Inventor: XU, Peicai, Guangzhou Guangdong 510382 (CN); LIU, Tianfu, Guangzhou Guangdong 511462 (CN)
(74) Representative: Nony
(86) International application number: PCT/CN2015/099883
(87) International publication number: WO 2016/206343

(57) **Abstract**

Disclosed is a fairing method for an asymmetric ship relating to the technical field of shipping, in which the asymmetric ship has an asymmetric stern, and a line type of a stern contour is distorted. The method includes following steps: in step 1, dividing a hull of the asymmetric ship into a plurality of regions; in step 2, fairing a line type of regions close to the stern contour by Pline, and fairing a line type of remaining regions of the asymmetric ship by orthogonal interpolation; in step 3, combining the faired line types of all regions; in step 4, generating a Whole-ship Patch of the asymmetric ship; in step 5, exporting a Whole-ship Surface of the asymmetric ship. According to the method, a disadvantage that a previous fairing method cannot be applied to the asymmetric ship can be overcome, thereby reducing a fairing workload and shortening a fairing cycle.

## Description

The present application for patent claims priority to a Chinese Patent application No. 2015103 5173 9.1, filed with the Chinese Patent Office on June 23, 2015, applied for by Guangzhou Shipyard International Ltd., Co., entitled 'fairing method for asymmetric ship', disclosures of both of which are incorporated herein by reference in their entireties.

### TECHNICAL FIELD

The present invention relates to the technical field of shipping, and in particular relates to a fairing method for an asymmetric ship.

### BACKGROUND

Fairing is a very important problem in CAD/CAM (Computer Aided Design/Computer Aided Manufacturing) and has an important application in shape design for airplanes, ships, automobiles, dies and the like. For a curve, fairing criteria include: second order smooth continuity, no redundant inflection point, uniform curvature change, no redundant varied torsal point and uniform torsion change. At present, a line type of a hull is faired by three groups of mutually orthogonal hull curves: X (a body line), Y (a buttock line) and Z (a waterline). Firstly, the body line is faired, then the buttock line is interpolated again and faired, and finally, the waterline is interpolated and faired; and after the fairing for the buttock line and the waterline is finished, the body line is updated and continues to be faired, and the cycle repeats until the line type of the hull conforms to the fairing degree required by design and production. Although the above method can solve a problem of fairing of part of the line type of the hull, for an asymmetric ship, such as a situation that a line type of a stern is asymmetric left and right, and a stern contour is not located at a middle longitudinal section, every data point cannot be arranged by lines (a module configured to fair a line type in Tribon system) according to an inherent law, a data arrangement sequence of each molded line is disordered, and fairing cannot be directly carried out at all when the waterline and the buttock line are interpolated due to a special reason that a line type of a region of the stern contour is excessively distorted if an existing fairing method for mutual interpolation of orthographic planes is used. In addition, since the line type is asymmetric, a larboard line type cannot be faired like a symmetric ship, and the larboard line type and a starboard line type must be respectively faired. Therefore, the workload is more than that of the symmetric ship by more than two times.

### SUMMARY

The present invention aims at proposing a fairing method, which can be suitable for fairing an asymmetric ship, so that the fairing workload is reduced, and the fairing cycle is shortened.

In order to achieve the purpose, the present invention adopts the following technical solution.

Provided is a fairing method for the asymmetric ship, in which the asymmetric ship has an asymmetric stern, and a line type of a stern contour is distorted. The fairing method includes following steps:
in step 1, dividing a hull of the asymmetric ship into a plurality of regions;
in step 2, fairing a line type of regions close to the stern contour by Pline, and fairing a line type of remaining regions of the asymmetric ship by orthogonal interpolation;
in step 3, combining the faired line types of all regions;
in step 4, generating a Whole-ship Patch of the asymmetric ship;
in step 5, exporting a Whole-ship Surface of the asymmetric ship.

In a further technical solution, in the step 1, the hull of the asymmetric ship is divided into a prow and a stern at midship; the prow is divided into a first prow and a second prow which are mutually symmetric by taking a middle longitudinal section of the hull as a symmetric plane; the stern contour is asymmetric relative to the middle longitudinal section of the hull; the stern is divided into a first stern and a second stern; and an interface of the first stern and the second stern includes the middle longitudinal section and the stern contour.

In a further technical solution, in the step 3, the faired first stern and the faired second stern are combined into the faired stern, the faired first prow and the faired second prow are combined into the faired prow, and then the faired stern and the faired prow are combined into a faired whole-ship line type.

In a further technical solution, arrangement positions of a faired first stern body line and a faired first stern waterline are staggered with arrangement positions of a second stern body line and a second stern waterline, so as to ensure smooth combination and in-sequence arrangement of data points when the faired first stern and the faired second stern are combined.

In a further technical solution, a staggered distance of the arrangement positions of the faired first stern body line and the faired first stern waterline and the arrangement positions of the second stern body line and the second stern waterline is 500mm.

In a further technical solution, a commissure of the faired whole-ship line type is partially faired.

In a further technical solution, in the step 4, an existed prow contour, the stern contour, a plain side line, a plain bottom line, a stern shaft outlet line and a highest waterline are called out as Whole-ship Patch boundaries before a new Patch boundary line is generated; the range of single Patch boundaries cannot simultaneously cross a straight line and an arc, and the number of the single Patch boundaries is less than or equal to 4 but is not equal to 3 as far as possible; and the Whole-ship Patch conforming to the requirements for design and production is established by gradually increasing boundary lines and repeatedly debugging.

In a further technical solution, in the step 5, a ship output project is established, and the Whole-ship Patch generated in the step 4 is added into the ship output project before the Whole-ship Surface of the asymmetric ship is exported; meanwhile, the stern contour is added into the Surface and is output together with the Surface, a Surface file <GLHULL> is released by a 'Release' instruction, and the file is imported into a server for subsequent modeling.

The present invention has the beneficial effects that:
according to the fairing method for the asymmetric ship in the present invention, the asymmetric ship is divided into several different regions to be faired respectively, wherein regions close to the complex stern contour are faired by Pline, and remaining regions are faired by orthogonal interpolation; and then different regions which are faired respectively are combined. Through the fairing method combining Pline and the orthogonal interpolation, a problem of a disordered arrangement sequence of data points of the body lines and the waterlines, which cannot be solved by orthogonal interpolation fairing, is solved, and a problem of fairing for the line type of the asymmetric ship are solved; and through reasonable whole-ship region division, a curvature upheaval region is decomposed into small relatively flat regions, so that the complex line type is simplified, thereby reducing the fairing difficulty and shortening the fairing cycle.

### BRIEF DESCRIPTION OF DRAWINGS

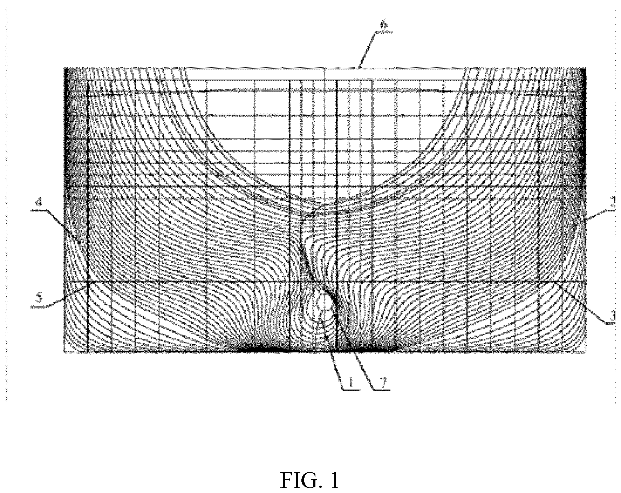

Fig. 1 is a molded line diagram illustrating an asymmetric ship provided by a specific implementation manner of the present invention.

1, stern contour; 2, first stern body line; 3, first stern waterline; 4, second stern body line; 5, second stern waterline; 6, highest waterline; 7, stern shaft outlet line.

### DETAILED DESCRIPTION

A technical solution of the present invention is further described below in combination with a drawing and in a specific implementation manner.

Fig. 1 is a molded line diagram illustrating an asymmetric ship provided by the specific implementation manner of the present invention

In the present invention, Pline is a three-dimensional curve used for fairing a line type of a hull (such as Pline used for fairing a line type of a hull in module Lines of Tribon system); Whole-ship Patch refers to a grid cell forming a curved surface of the hull; Surface refers to a digitized data packet of the curved surface of the hull.

Provided is a fairing method for an asymmetric ship, in which the asymmetric ship has an asymmetric stern, and a line type of a stern contour is distorted. The fairing method includes following steps.

In step 1, a hull of the asymmetric ship is divided into a plurality of regions, and preferably, the hull of the asymmetric ship is divided into a prow and a stern at midship, the prow is divided into a first prow and a second prow which are mutually symmetric by taking a middle longitudinal section of the hull as a symmetric plane, a stern contour 1 is asymmetric relative to the middle longitudinal section of the hull, the stern is divided into a first stern and a second stern, and an interface of the first stern and the second stern includes the middle longitudinal section and the stern contour 1;
in step 2, a line type of regions close to the stern contour 1 is faired by Pline, and a line type of remaining regions of the asymmetric ship is faired by orthogonal interpolation. Different sizes of the range of regions close to the stern contour 1, which is faired by Pline described in the present invention, can be selected according to different sizes of the hull, or different sizes of the range of regions close to the stern contour 1, which is faired by Pline described in the present invention, can be selected according to curvature change features of the line type of the hull. In the present invention, an asymmetric ship with displacement of 115,000 tons is taken as an example, wherein the regions nearby include: in a transverse direction of the hull, position 2.25m from the stern contour 1 to a larboard and position 0.01m from the stern contour 1 to a starboard; and in a length direction of the hull, -4.6 to 34m in length direction of the larboard, and -4.6 to 25. 6m in length direction of the starboard;
in step 3, the faired line types of all regions are combined, the faired first stern and the faired second stern are combined into the faired stern, the faired first prow and the faired second prow are combined into the faired prow, and then the faired stern and the faired prow are combined into a faired whole-ship line type;
in step 4, a Whole-ship Patch of the asymmetric ship is generated;
in step 5, a Whole-ship Surface of the asymmetric ship is exported.

In the step 3, the arrangement positions of a faired first stern body line 2 and a faired first stern waterline 3 are staggered with the arrangement positions of a second stern body line 4 and a second stern waterline 5, so as to ensure smooth combination and in-sequence arrangement of data points when the faired first stern and the faired second stern are combined. Specifically, the staggered distance of the arrangement positions of the faired first stern body line 2 and the faired first stern waterline 3 and the arrangement positions of the second stern body line 4 and the second stern waterline 5 is 500mm, and the staggered distance may be determined according to particular conditions and is not limited to 500mm.

After combination, a commissure of the whole-ship line type is partially faired, the left and the right of the commissure of the combined whole-ship line type are emphatically inspected, and regions with unsmooth curvature are partially amended.

A highest waterline 6 of the whole-ship line type needs to be processed into a whole-ship waterline, so as to facilitate subsequent generation of the Patch.

In the step 4, an existed prow contour, the stern contour 1, a plain side line, a plain bottom line, a stern shaft outlet line 7 and the highest waterline 6 need to be called out as Whole-ship Patch boundaries before a new Patch boundary line is generated; the range of single Patch boundaries cannot simultaneously cross a straight line and an arc, the number of the single Patch boundaries is less than or equal to 4 but is not equal to 3 as far as possible, so as to eliminate degraded Patch angle points emerged due to this; and the Whole-ship Patch conforming to the requirements for design and production is established by gradually increasing boundary lines and repeatedly debugging. The number of the Patches with three boundaries may be decreased since the number of the Patches with three boundaries is as less as possible. For example, the number of the Patches with three boundaries is minimized.

In the step 5, a ship output project needs to be established, and the Whole-ship Patch generated in the step 4 is added into the ship output project before the Whole-ship Surface of the asymmetric ship is exported; meanwhile, a complex space curve is added into the Surface and is output together with the Surface, a Surface file <GLHULL> is released by a 'Release' instruction, and the file is imported into a server for subsequent modeling.

Apparently, above embodiments of the present invention are only examples made for clear description of the present invention, rather than limits to the implementation manners of the present invention. Those ordinary skilled in the art can also make other different forms of changes or variations based on the above description. Herein, all implementation manners are not and cannot be listed. Any modification, equivalent replacement, improvement and the like made within the spirit and the principle of the present invention should be included in a protection scope of claims of the present invention.

## Claims

1. A fairing method for an asymmetric ship, in which the asymmetric ship has an asymmetric stern, and a line type of a stern contour is distorted; and the fairing method comprises following steps:
in step 1, dividing a hull of the asymmetric ship into a plurality of regions;
in step 2, fairing a line type of regions close to the stern contour (1) by Pline, and fairing a line type of remaining regions of the asymmetric ship by orthogonal interpolation;
in step 3, combining the faired line types of all regions;
in step 4, generating a Whole-ship Patch of the asymmetric ship;
in step 5, exporting a Whole-ship Surface of the asymmetric ship.

2. The fairing method for the asymmetric ship according to claim 1, wherein in the step 1, the hull of the asymmetric ship is divided into a prow and a stern at midship, the prow is divided into a first prow and a second prow which are mutually symmetric by taking a middle longitudinal section of the hull as a symmetric plane, the stern contour (1) is asymmetric relative to the middle longitudinal section of the hull, the stern is divided into a first stern and a second stern, and an interface of the first stern and the second stern comprises the middle longitudinal section and the stern contour (1).

3. The fairing method for the asymmetric ship according to claim 1, wherein in the step 3, the faired first stern and the faired second stern are combined into the faired stern, the faired first prow and the faired second prow are combined into the faired prow, and then the faired stern and the faired prow are combined into a faired whole-ship line type.

4. The fairing method for the asymmetric ship according to claim 3, wherein arrangement positions of a faired first stern body line (2) and a faired first stern waterline (3) are staggered with arrangement positions of a second stern body line (4) and a second stern waterline (5), so as to ensure smooth combination and in-sequence arrangement of data points when the faired first stern and the faired second stern are combined.

5. The fairing method for the asymmetric ship according to claim 4, wherein a staggered distance of the arrangement positions of the faired first stern body line (2) and the faired first stern waterline (3) and the arrangement positions of the second stern body line (4) and the second stern waterline (5) is 500mm.

6. The fairing method for the asymmetric ship according to claim 3, wherein a commissure of the faired whole-ship line type is partially faired.

7. The fairing method for the asymmetric ship according to claim 1, wherein in the step 4, an existed prow contour, the stern contour (1), a plain side line, a plain bottom line, a stern shaft outlet line (7) and a highest waterline (6) are called out as Whole-ship Patch boundaries before a new Patch boundary line is generated; a range of single Patch boundaries does not simultaneously cross a straight line and an arc, the number of the single Patch boundaries is less than or equal to 4 and number of the Patches with three boundaries is decreased; and the Whole-ship Patch conforming to the requirements for design and production is established by gradually increasing boundary lines and repeatedly debugging.

8. The fairing method for the asymmetric ship according to claim 1, wherein in the step 5, a ship output project is established, and the Whole-ship Patch generated in the step 4 is added into the ship output project before the Whole-ship Surface of the asymmetric ship is exported; meanwhile, a complex space curve is added into the Surface and is output together with the Surface, a Surface file <GLHULL> is released by a 'Release' instruction, and the file is imported into a server for subsequent modeling.
